# EUROPEAN PATENT SPECIFICATION

(11) **EP 0 473 589 B1**
(45) Date of publication and mention of the grant of the patent: **25.05.1994**
(21) Application number: 90902859.9
(22) Date of filing: 05.02.1990
(51) Int. Cl.: H02G 3/08

(54) **FASTENING MEANS**
BEFESTIGUNGSMITTEL
MOYEN DE FIXATION

(30) Priority: 07.02.1989 SE 8900419
(43) Date of publication of application: 11.03.1992
(73) Proprietor: THORSMAN & CO AB, S-611 29 Nyköping (SE)
(72) Inventor: ERIKSSON, Staffan, S-610 55 Stigtomta (SE)
(74) Representative: Baumbach, Thorkild
(86) International application number: SE9000075
(87) International publication number: WO9009692

(56) References cited:
- SE-A-87 020 558

## Description

### TECHNICAL FIELD

The present invention relates to a conduit box provided with fastening means for attaching to trunking sections of the type having a front opening which comprises on both sides of the opening mutually facing flanges or parts of the trunking section. The conduit box comprises an essentially square box body open at one end the side walls of which are provided with holes or notches for insertion of electrical cables into the box and, at the box opening, with means arranged for fastening of different types of equipment inserted in the box. Such a box is known from SE-B-464 789.

### PRIOR ART

Trunking systems are used to an increasing extent at installations of electrical- and telecommunication- as well as datacommunication cables in offices, laboratories and workshops. The trunking sections could be provided with separate compartments in order to separate power cables, telecommunication- and datacommunication cables from each other. The trunking sections are not only used for cables. Together with the cables different types of sockets, control means and similar are mounted in the trunking sections designed as insertions for conduit boxes which conduit boxes preferably are arranged in such a way that their openings are flush with the front of the trunking section. Usually the conduit boxes are fixed to the bottom of the trunking section which when the depth and bottom design of the trunking section vary has led to the design of a number of different fastening means and types of conduit boxes. The number of different conduit boxes has also been increased due to the fact that the distance between the center of the fastening screws is different in different countries. This often means short series and poor profitability for the manufacturers and concerning both manufacturers and wholesale dealers it means forced keeping in stock of a large selection of conduit boxes and fastening means which means high handling- and storage costs.

### DISCLOSURE OF THE INVENTION

The object of the present invention is to provide a conduit box which allows a reduction of the number of different boxes and completely eliminates the need for separate fastening means due to the fact that the box as such comprises a fastening means.

Another object is to provide a conduit box which can easily be adapted to the requirements and regulations of different countries relating to the fastening of the insertions in the conduit box as well as the secure fastening of the box itself in the trunking section.

A further object is to provide a conduit box in which an apparatus inserted with pre-mounted cables can easily be fixed without the necessity of complicated entering of cables through holes in the side of the box.

These objects are attained according to the invention by means of a conduit box having the characterising features of the following claims.

### BRIEF DESCRIPTION OF THE DRAWINGS

The invention will be described more in detail with reference to an embodiment which is shown in the enclosed drawing in which figure 1 shows a conduit box arranged to be inserted in the front opening of a trunking section shown in section, figure 2 shows the same conduit box after the insertion into the front opening, figure 3 shows the same conduit box locked to the opening of the trunking section and figure 4 shows the conduit box and the trunking section in a plane view.

### PREFERRED EMBODIMENT

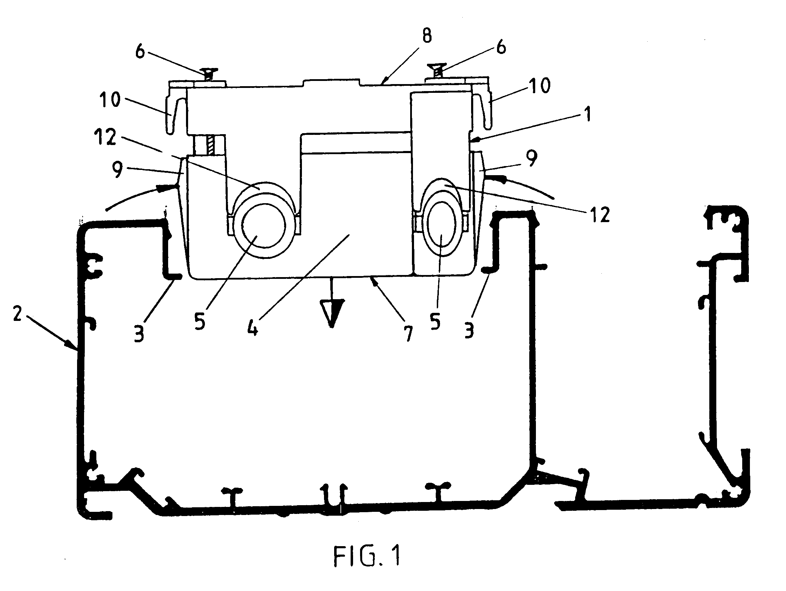

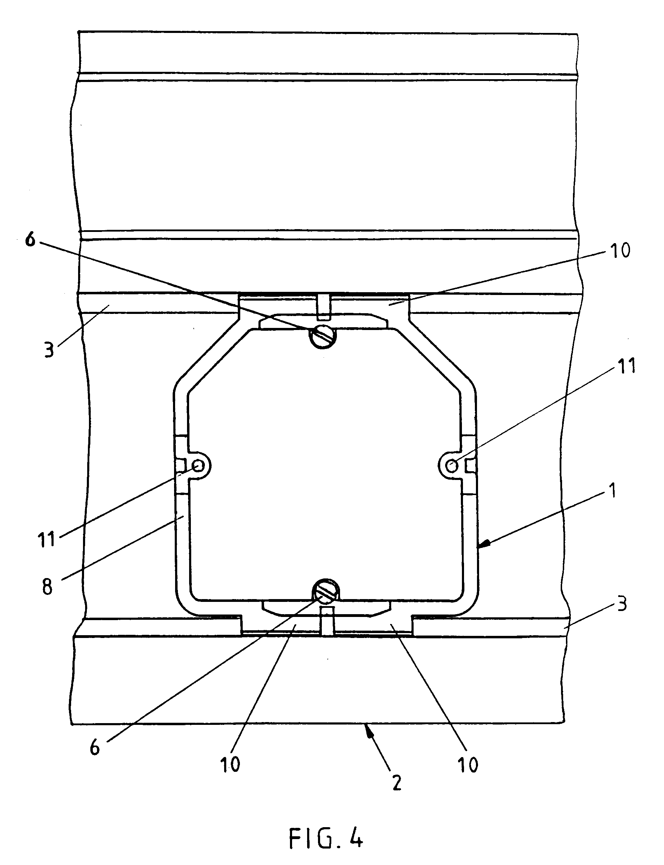

In figure 1 is shown a conduit box 1 arranged for insertion in a trunking section 2, shown in section, the front opening of which comprises mutually facing flanges or parts 3 of the trunking section on both sides of the front opening. The conduit box consists of a square box body having two chamfered corners and being open at one end comprising two parts of which a first or lower part 7 comprises the bottom of the box and the portion of the side walls 4 which is intended to be arranged inside the trunking section 2. Hole notches or fracturable parts 5 are arranged in said wall portion 4 for insertion in the box of electrical cables, not shown. These fracturable parts 5 are arranged at the bottom of grooves 12 in the wall of the box which grooves are open in the direction of the box opening. The second or upper part 8 of the body of the box comprises the wall portions around the box opening in which fastening means in the form of through screws 6 are arranged to keep together the two parts of the box 7, 8. The screws 6 are arranged in such a way that they could be used for fixing of equipment inserted in the box and to that effect additional screw holes 11 are arranged, as shown in figure 4.

For guiding the two parts of the conduit box in relation to each other guiding reeds 13 extend from the second or upper part 8 which correspond to the grooves 12 in the first or lower part. The end portions of the reeds are adjusted to the fracturable parts 5 in such a way that when the box is mounted and a fracturable part 5 has been removed a circular hole for insertion of a cable is created.

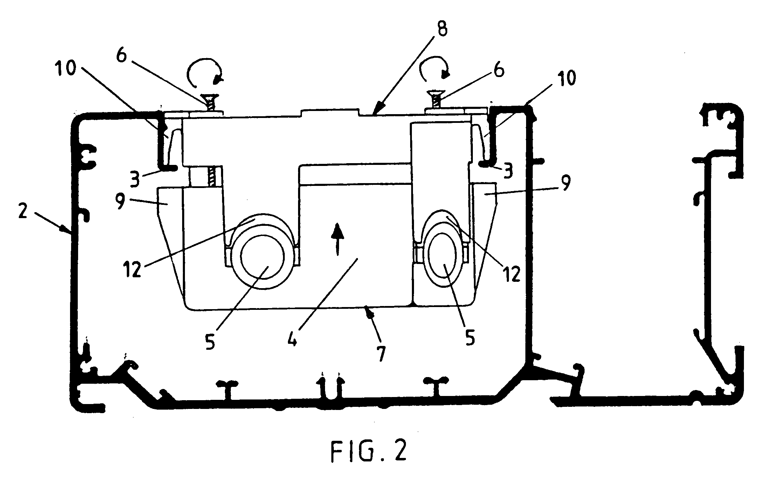

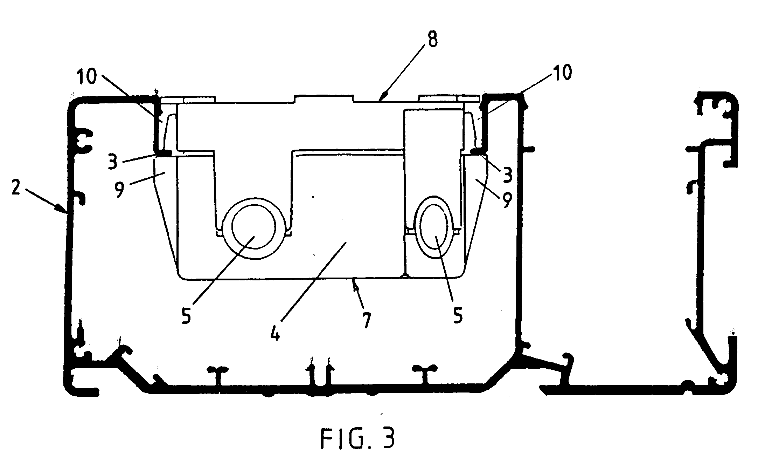

In the side walls 4 of the first part of the conduit box movable support studs 9 are arranged, journalled at the bottom of the box, in those wall parts which in the fixed state of the box are facing the flanges 3 of the trunking section. At the mounting of the box the support studs 9 are pressed into the box, as indicated with arrows in figure 1, in order to expand and engage behind the flanges 3 when the box has been inserted through the front opening of the trunking section, as shown in figure 2. The conduit box will be locked to the trunking section by tightening of the screws 6 at which the support strips 10, arranged at the second box part 8 and the support studs 9 on the first box part 7 are brought into contact with the upper- and underside of the flanges 3 respectively as shown in figure 3.

Due to the fact that the holes for insertion of cables in the conduit box has the form of grooves in the lower part, open in the direction of the opening of the box , when its two parts are taken apart, apparatuses for insertion, not shown, could easily be placed in the box with pre-mounted cables without complicated insertion of cables, with sprawling end portions, through holes.

## Claims

1. A conduit box (1) provided with fastening means for attaching to trunking sections (2) of the type having a front opening which comprises on both sides of the opening mutually facing flanges (3) or parts of the trunking section (2), said conduit box comprising an essentially square box body open at one end, the side walls (4) of which are provided with hand holes or notches (5) for insertion of electrical cables into the box and, at the box opening, with means arranged for fastening of different types of equipment inserted in the box, **characterised in that** the conduit box comprises two parts, a first part (7) intended for insertion into the trunking section which comprises the bottom of the box and the portion of the side walls in which the holes or the hole notches for insertion of electrical cables into the box are arranged, and a second part (8), intended for arrangement in the front opening of the trunking section, which comprises the wall portions around the box opening with means for receiving said equipment, which two parts of the box are arranged to be fixed against each other at the mounting in a trunking section, by means of fastening means (6) extending from either part and engaging the counterpart, at the same time as support studs (9) arranged in the first part, unfoldable or otherwise movable, engage behind the flanges (3) arranged on both sides of the front opening and support pins or support strips (10), arranged on the second part, are brought into contact with the outside of the flanges (3) of the trunking section.

## Patentansprüche

1. Mit Befestigungselementen ausgerüstete Abzweigdose (1) zur Befestigung an Verbindungsleitungsabschnitten (2) des Typs, der eine Frontöffnung besitzt, die an beiden Seiten der Öffnung einander gegenüberliegende Flansche oder Teile (3) des Verbindungsleitungsabschnitts aufweist, wobei die Abzweigdose ein im wesentlichen quadratisches, an einem Ende offenes Dosengehäuse, dessen Seitenwände (4) einerseits mit Löchern oder Schlitzen (5) zum Einzug von elektrischen Kabeln in die Dose, und andererseits an der Dosenöffnung mit Vorrichtungen zur Befestigung von Insertionsausrüstungen unterschiedlicher Typen versehen sind, aufweist, **dadurch gekennzeichnet,** daß die Abzweigdose aus zwei Teilen besteht, einem ersten Teil (7) zur Insertion in den Verbindungsleitungsabschnitt, der den Boden der Dose und den Teil der Seitenwände, in dem die Löcher oder Lochschlitze zum Einzug von elektrischen Kabeln in die Dose angeordnet sind, und einem zweiten, zur Anordnung in der Frontöffnung des Verbindungsleitungsabschnitts bestimmten Teil (8), der die Wandteile um die Dosenöffnung mit Vorrichtungen zur Aufnahme der Insertionsausrüstung aufweist, wobei beide Teile der Dose so angeordnet sind, daß sie bei der Montage in einem Verbindungsleitungsabschnitt durch sich von jedem Teil erstreckende und in das Gegenstück eingreifende Befestigungselemente (6) aneinander befestigt werden, zur gleichen Zeit wie Stützansätze (9), die im ersten Teil entfaltbar oder sonstwie bewegbar angeordnet sind, und hinter die auf beiden Seiten der Frontöffnung angeordnete Flansche (3) eingreifen, und im zweiten Teil angeordnete Stützstifte oder Stützstreifen (10) in Kontakt mit der Außenseite der Flansche (3) des Verbindungsleitungsabschnitts gebracht werden.

## Revendications

1. Boîte de conduit (1) munie de moyens de fixation, destinée à se fixer dans des gaines de canalisations (2) du type comportant une ouverture avant munie, des deux côtés de l'ouverture, de rebords ou parties (3) de la gaine de canalisation venant en face l'une de l'autre, cette boîte de conduit comprenant un corps de boîte essentiellement carré ouvert à une extrémité, dont les parois latérales (4) sont munies d'une part de trous ou encoches (5) pour introduire des câbles électriques dans la boîte, et d'autre part, à l'ouverture de la boîte, de moyens de fixation de différents types d'équipement d'introduction, caractérisée en ce que la boîte de conduit comprend deux parties, une première partie (7) destinée à être introduite dans la gaine de canalisation, comprenant le fond de la boîte et la partie de parois latérales dans lesquelles sont disposés les trous ou les encoches de trous destinés à l'introduction de câbles électriques dans la boîte, et une seconde partie (8) destinée à être disposée dans l'ouverture avant de la gaine de canalisation, cette seconde partie comprenant les parties de parois situées autour de l'ouverture de la boîte avec des moyens pour recevoir l'équipement d'introduction, ces deux parties de la boîte étant conçues pour être fixées l'une contre l'autre au moment du montage dans une gaine de canalisation, grâce à des moyens de fixation (6) partant de l'une ou l'autre des deux parties et s'engageant dans l'autre partie correspondante, en même temps que des crampons de support (9) montés dans la première partie et dépliables ou mobiles de toute autre manière, viennent s'engager derrière les rebords (3) disposés des deux côtés de l'ouverture avant, tandis que des tiges ou bandes de support (10) montées sur la seconde partie, sont amenées en contact avec l'extérieur des rebords (3) de la gaine de canalisation.
